# EUROPEAN PATENT SPECIFICATION

(11) **EP 1 441 273 B1**
(45) Date of publication and mention of the grant of the patent: **28.06.2006**
(21) Application number: 03014464.6
(22) Date of filing: 01.07.2003
(51) Int. Cl.: G05D 16/04, G01L 7/04, F17C 13/02, G01L 19/14, F02M 21/02

(54) **Pressure regulator with pressure gauge, particularly for LPG tanks**
Druckregler mit Druckmesser, insbesondere für Flüssiggastanks
Régulateur de pression avec manomètre, en particulier pour réservoirs GPL

(30) Priority: 22.01.2003 IT MI20030091
(43) Date of publication of application: 28.07.2004
(73) Proprietor: Cavagna Group S.p.A., 25010 Ponte S. Marco di Calcinato (Prov. of Brescia) (IT)
(72) Inventor: Cavagna, Savio, 25010 Ponte S. Marco di Calcinato (IT)
(74) Representative: Modiano, Micaela Nadia

(56) References cited:
- EP-A- 1 054 245
- EP-A- 1 120 561
- DE-A- 19 947 215
- US-A- 4 176 558
- US-A- 4 860 787
- US-A- 5 121 637

## Description

The present invention relates to a pressure regulator with pressure gauge, particularly for LPG bottles.

As is known, pressure regulators for bottles of LPG (liquefied petroleum gas) in some cases require the presence of a pressure gauge in order to measure the pressure conditions of the incoming gas.

With current solutions, the pressure gauge is screwed hermetically in a suitable seat provided in the body of the pressure regulator.

This type of solution suffers various drawbacks, the most important of which is constituted by the fact that it is necessary to provide a gas-tight seal in the region where the pressure gauge is screwed on, with the risk of crushing the gasket and consequently leaking fluid.

Another problem is constituted by the fact that the pressure gauge, with the connection described above, constitutes a protruding element that can be subject to impacts, with possible damage, and in some more severe cases with severing of the pressure gauge, with the obvious associated risks.

US-A-4 860 787 discloses a pressure regulator as defined in the preamble of claim 1.

The aim of the invention is to solve the problems described above by providing a pressure regulator with pressure gauge, particularly for LPG bottles, in which it is possible to connect the pressure gauge with gaskets that cannot be crushed and accordingly are always able to ensure an optimum seal.

Within this aim, an object of the present invention is to provide a pressure regulator in which the pressure gauge acts as an integrated element that is particularly protected.

Another object of the present invention is to provide a pressure regulator with pressure gauge which, thanks to its particular constructive characteristics, is capable of giving the greatest assurances of reliability and safety in use.

Another object of the present invention is to provide a pressure regulator that can be obtained easily starting from commonly commercially available elements and materials and is also competitive from a merely economical standpoint.

This aim and these and other objects that will become better apparent hereinafter are achieved by a pressure regulator with pressure gauge, particularly for LPG bottles, as defined in claim 1.

Further characteristics and advantages of the present invention will become better apparent from the description of a preferred but not exclusive embodiment of a pressure regulator with pressure gauge, particularly for LPG bottles, which is illustrated by way of non-limitative example in the accompanying drawings, wherein:
Figure 1 is a schematic exploded perspective view of the pressure regulator according to the invention;
Figure 2 is a sectional exploded view of a detail of the pressure gauge and of the means for connection to the regulator;
Figure 3 is a partially cutout view of the pressure regulator;
Figure 4 is a view of a detail of the connection means with the pressure gauge inserted;
Figure 5 is a top plan view of the pressure regulator.

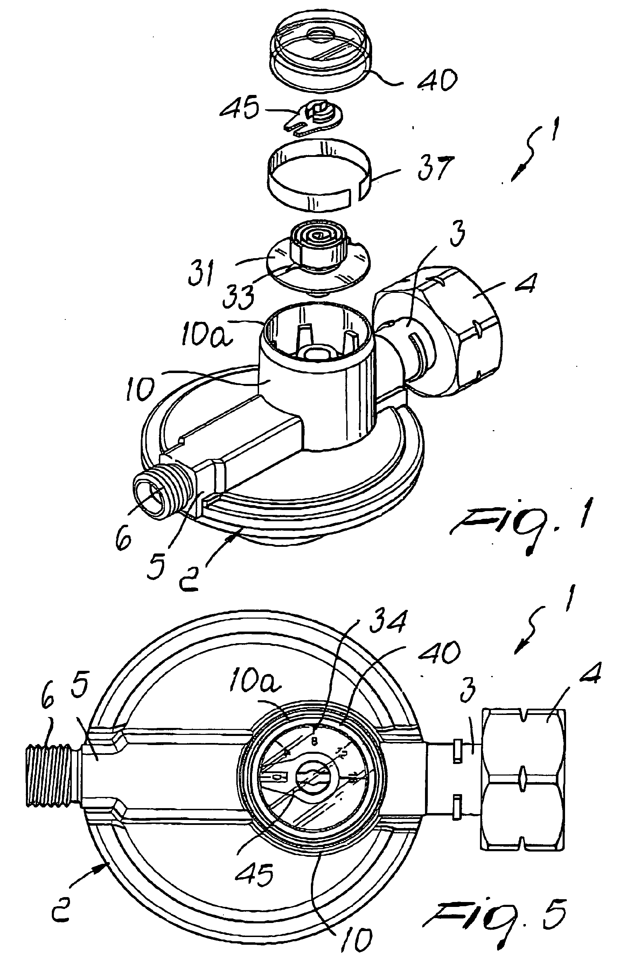

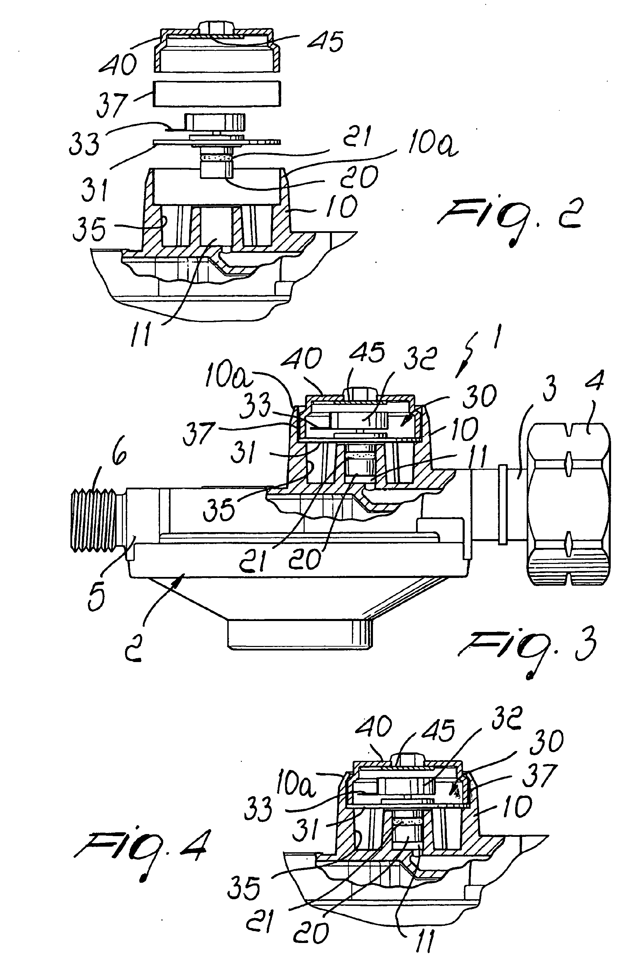

With reference to the figures, the pressure regulator with pressure gauge, particularly for LPG bottles, according to the invention, generally designated by the reference numeral 1, comprises a regulator body 2, of a per se known type, which is provided with an inlet 3 with a locking nut 4 and with an outlet 5 with a threaded portion 6.

The pressure regulator has means for the connection of a pressure gauge, and the connection means have an outer side wall that is constituted by a cylindrical body 10 that is formed monolithically with the body 2.

Advantageously, the outer side wall 10 forms internally a chamber 11 that is connected to the inlet 3.

A shank 20, provided with a sealing O-ring 21, of a pressure gauge 30 can be inserted in chamber 11. The pressure gauge is advantageously constituted by a disk 31 above which a coil-type detector 32 is arranged, the detector being advantageously constituted by a Bourdon tube, which has a pointer 33 that can be positioned with respect to a scale 34 that is formed on the disk 31.

The disk 31 is supported by radial ribs 35, which are formed on the inner surface of the side wall, and an elastic spacer ring 37 can be arranged above it; the ring is constituted by a lamina that is shaped like a split ring and is arranged so as to engage the peripheral rim of the disk 31 and be accommodated on the outside of a pressure gauge glass lens 40 on which there is an orientatable reference pointer 45 that allow to provide a reference element that can be positioned at will.

In order to retain the pressure gauge within the side wall 10, the upper edge of the cylindrical side wall, designated by the reference numeral 10a, can be folded over so as to engage above the elastic ring 37, which is retained in an axial direction and consequently keeps in position the pressure gauge by way of its engagement with the disk 31.

With the arrangement described above, therefore, the pressure gauge is integrated in the body of the regulator and is protected adequately.

Moreover, all the tightness problems are solved, since the seal is entrusted to the O-ring 21 arranged on the shank 20, which is not subjected to a crushing action and does not require particular screwing or insertion operations.

From what has been described above it is therefore evident that the invention achieves the intended aim and objects, and in particular the fact is stressed that with the described arrangement the pressure gauge can be applied very rapidly and simply and optimum sealing conditions are also always ensured.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2003A000091 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pressure regulator (1) with pressure gauge, particularly for LPG bottles, which comprises a regulator body (2) that forms an inlet (3) and an outlet (5), means for connecting a pressure gauge being further provided, said connection means forming a chamber (11) for accommodating a pressure gauge (30), said chamber being formed by an outer side wall (10) that is formed monolithically with said body (2) of the regulator, **characterized in that** said outer side wall (10), is constituted by a cylindrical body that is monolithic with said regulator body (2), said chamber (11) formed in said outer side wall (10) is connected to said inlet (3), said pressure gauge (30) comprising a shank (20) which is inserted hermetically in said chamber (11) and has a sealing O-ring (21), **in that** said pressure gauge (30) comprises a disk (31) that supports axially said shank (20), which is in turn connected to a coil-type detector (32) constituted by a Bourdon tube and **in that** it comprises an elastic spacer ring (37) that engages said disk (31) peripherally and engages the outside of a pressure gauge lens (40) which is accommodated in said outer side wall (10), said elastic spacer ring (37) being retained in position by the folding of the free edge (10a) of said outer side wall (10).

2. The pressure regulator according to claim 1, **characterized in that** said coil-type detector (32) has a pointer (33) which is positioned with respect to a reference scale (34) provided on said disk (31).

3. The pressure regulator according to claim 1, **characterized in that** it comprises, in said outer side wall (10), radial ribs (35) that act as a support for said disk (31).

4. The pressure regulator according to claim 1, **characterized in that** said elastic spacer ring (37) is constituted by a lamina that forms a split ring.

## Patentansprüche

1. Druckregler (1) mit einem Druckanzeiger, insbesondere für LPG-Flaschen, welcher einen Reglerkörper (2) aufweist, der einen Einlass (3) und einen Auslass (5) bildet, wobei femer eine Vorrichtung zum Verbinden eines Druckanzeigers vorgesehen ist und die Verbindungsvorrichtung eine Kammer (11) zur Unterbringung eines Druckanzeigers (30) bildet, wobei die Kammer durch eine äußere Seitenwand (10) gebildet ist, die monolithisch mit dem Körper (2) des Reglers ausgebildet ist, **dadurch gekennzeichnet, dass** die äußere Seitenwand (10) durch einen zylindrischen Körper gebildet ist, der monolithisch mit dem Reglerkörper (2) ist, wobei die Kammer (11), die in der äußeren Seitenwand (10) gebildet ist, mit dem Einlass (3) verbunden ist, wobei der Druckanzeiger (30) einen Schaft (20) aufweist, der hermetisch in der Kammer (11) eingefügt ist und einen dichtenden O-Ring (21) aufweist, dass der Druckanzeiger (30) eine Scheibe (31) aufweist, die axial den Schaft (20) trägt, der in Folge mit einem spiralartigen Detektor (32) verbunden ist, der durch ein Bourdon-Rohr gebildet ist, und dass der Regler einen elastischen Abstandsring (37) aufweist, der die Scheibe (31) peripher umgreift und der die Außenseite einer Druckanzeiger-Linse (40) umgreift, welche in der äußeren Seitenwand (10) untergebracht ist, wobei der elastische Abstandsring (37) durch das Falten der freien Kante (10a) der äußeren Seitenwand (10) in Position gehalten ist.

2. Druckregler nach Anspruch 1, **dadurch gekennzeichnet, dass** der spiralartige Detektor (32) einen Zeiger (33) aufweist, der in Bezug auf eine Referenzskala (34) positioniert ist, die an der Scheibe (31) vorgesehen ist.

3. Druckregler nach Anspruch 1, **dadurch gekennzeichnet, dass** er in der äußeren Seitenwand (10) Radialrippen (35) aufweist, die als ein Träger für die Scheibe (31) wirken.

4. Druckregler nach Anspruch 1, **dadurch gekennzeichnet, dass** der elastische Abstandsring (37) durch eine Lamelle gebildet wird, welche einen Spaltring bildet.

## Revendications

1. Régulateur de pression (1) avec manomètre, notamment pour réservoirs GPL, comprenant un corps régulateur (2) qui forme une entrée (3) et une sortie (5), des moyens pour relier un manomètre étant en outre prévus, lesdits moyens de connexion formant une chambre (11) pour loger un manomètre (30), ladite chambre étant formée par une paroi latérale externe (10) qui est formée de façon monolithique avec ledit corps (2) du régulateur, **caractérisé en ce que** ladite paroi latérale externe (10) est constituée par un corps cylindrique qui est monolithique avec ledit corps régulateur (2), ladite chambre (11) formée dans ladite paroi latérale externe (10) est reliée à ladite entrée (3), ledit manomètre (30) comprenant une queue (20) qui est insérée hermétiquement dans ladite chambre (11) et présente un joint torique d'étanchéité (21), **en ce que** ledit manomètre (30) comprend un disque (31) qui supporte axialement ladite queue (20), qui est à son tour reliée à un détecteur du type bobine (32) constitué par un tube de Bourdon et **en ce qu'**il comprend une bague d'espacement élastique (37) qui vient en prise avec ledit disque (31) de façon périphérique et vient en prise avec l'extérieur d'une lentille de manomètre (40) qui est logée dans ladite paroi latérale externe (10), ladite bague d'espacement élastique (37) étant retenue en position par le pliage d'un bord libre (10a) de ladite paroi latérale externe (10).

2. Régulateur de pression selon la revendication 1, **caractérisé en ce que** ledit détecteur du type bobine (32) présente une aiguille indicatrice (33) qui est positionnée par rapport à une échelle de référence (34) prévue sur ledit disque (31).

3. Régulateur de pression selon la revendication 1, **caractérisé en ce qu'**il comprend, dans la paroi latérale externe (10), des nervures radiales (35) qui agissent en tant que support pour ledit disque (31).

4. Régulateur de pression selon la revendication 1, **caractérisé en ce que** ladite bague d'espacement élastique (37) est constituée par une lamelle qui forme un anneau fendu.
